# EUROPÄISCHE PATENTANMELDUNG

(11) **EP 4 276 383 A1**
(43) Veröffentlichungstag der Anmeldung: **15.11.2023**
(21) Anmeldenummer: 23170411.5
(22) Anmeldetag: 27.04.2023
(51) Int. Cl.: F24S 40/20, H02S 40/10, B08B 1/00, B08B 3/02

(54) **REINIGUNGSVORRICHTUNG ZUM HALBAUTOMATISCHEN REINIGEN VON OBERFLÄCHEN**

(30) Priorität: 09.05.2022 DE 102022111508
(71) Anmelder: Kaufmann, Werner, 8880 Walenstadt (CH)
(72) Erfinder: Kaufmann, Werner, 8880 Walenstadt (CH)
(74) Vertreter: Manitz Finsterwald Patent- und Rechtsanwaltspartnerschaft mbB

(57) **Zusammenfassung**

Die Erfindung betrifft eine Reinigungsvorrichtung zur halbautomatischen Reinigung von Oberflächen von Solarmodulen und/oder Photovoltaikanalagen umfassend eine Antriebseinheit zum Fortbewegen der Reinigungsvorrichtung in eine Fortbewegungsrichtung, wobei die Antriebseinheit zumindest einen Antriebsmotor, insbesondere einen Getriebemotor, wobei der Antriebsmotor zumindest derart ausgestaltet ist, dass er die Reinigungsvorrichtung versetzt, einen Vorratstank zum Mitführen eines Reinigungsmittels, zumindest eine Reinigungsdüse zum Aufbringen des Reinigungsmittels auf die Oberfläche, wobei die Reinigungsdüse eine Fluidverbindung mit dem Vorratstank aufweist, und zumindest ein Reinigungselement zum Reinigen der Oberfläche mittels des Reinigungsmittels.

## Beschreibung

Die Erfindung betrifft eine Reinigungsvorrichtung zum halbautomatischen Reinigen von Oberflächen von Solarmodulen und/oder Photovoltaikanalagen.

Die Oberflächen von Solarmodulen und/oder Photovoltaikanlagen sind für gewöhnlich ununterbrochen der Witterung ausgesetzt, insbesondere da sie mittlerweile häufig auf Flachdächern von Gebäuden aufgestellt werden. Dementsprechend ist eine fortschreitende Verschmutzung dieser Anlagen vorprogrammiert. Insbesondere in niederschlagsarmen Gebieten stellt dies ein erhebliches Problem dar, da wenig bis gar keine natürliche Reinigung der Solarmodule durch Regen stattfinden kann.

Es ist bekannt, dass durch die Verschmutzung der Oberflächen von Solarmodulen der Wirkungsgrad dieser Module erheblich gesenkt wird. Diverse Studien zeigten sogar, dass je nach geographischer Lage und Ausrichtung der Solarmodule Leistungsverluste von 8 bis 15% entstehen können.

Um diesen Leistungsverlusten entgegen zu wirken, müssten die Oberflächen der Solarmodule in regelmäßigen Abständen, beispielsweise alle 2 bis 3 Jahre, gereinigt werden.

Häufig geschieht dies noch manuell mit Hilfe von Bürsten, welche über Schläuche mit Reinigungsmittel (bspw. Wasser, insbesondere aufbereitetes Reinwasser (d.h. entmineralisiertes Wasser)) versorgt werden, gereinigt. Eine manuelle Reinigung hat allerdings den Nachteil, dass sie größtenteils langsam, ungleichmäßig sowie durch den Einsatz von Arbeitskräften verhältnismäßig teuer ist, insbesondere das Aufbereiten von entmineralisiertem Wasser.

Es sind daher bereits automatische Reinigungsanlagen bekannt, welche ein Solarmodul oder auch ganze Modulreihen automatisch abfahren und reinigen. Diese können jedoch häufig aufgrund von Platzmangel zwischen den verschiedenen (aufgeständerten) Modulreihen, insbesondere aufgrund der heutzutage üblichen Ost-West-Ausrichtung der Solaranlagen, oder auch aufgrund einer ungünstigen Platzierung der Module, beispielsweise auf Flachdächern von Gebäuden, häufig nicht zum Einsatz kommen. Ein Grund dafür ist, dass die Reinigungsanlagen über Schläuche von externen Tanks mit Reinigungsmittel versorgt werden. Dementsprechend muss zwischen den Modulreihen zumindest Platz für besagte Schläuche, teilweise auch für die Tanks, sein. Dieser Umstand hat sich in der Vergangenheit als nachteilig herausgestellt.

Es ist demnach die Aufgabe der Erfindung eine Reinigungsvorrichtung bereitzustellen, welche die Reinigung von Solarmodulen und/oder Photovoltaikanalagen sowohl verbessern als auch teil-automatisieren kann und welche gleichzeitig auch bei geringen Platzverhältnissen einsetzbar ist.

Diese Aufgabe wird durch den Gegenstand von Anspruch 1 gelöst.

Die erfindungsgemäße Reinigungsvorrichtung zur halbautomatischen Reinigung von Oberflächen von Solarmodulen und/oder Photovoltaikanalagen umfasst hierfür eine Antriebseinheit zum Fortbewegen der Reinigungsvorrichtung in eine Fortbewegungsrichtung, wobei die Antriebseinheit zumindest einen Antriebsmotor, insbesondere einen Getriebemotor, umfasst und wobei der Antriebsmotor zumindest derart ausgestaltet ist, dass er die Reinigungsvorrichtung in Bewegung versetzt. Des Weiteren umfasst die Reinigungsvorrichtung einen Vorratstank zum Mitführen eines Reinigungsmittels, zumindest eine Reinigungsdüse zum Aufbringen des Reinigungsmittels auf die Oberfläche, wobei die Reinigungsdüse eine Fluidverbindung mit dem Vorratstank aufweist, und zumindest ein Reinigungselement zum Reinigen der Oberfläche mittels des Reinigungsmittels.

Die Erfindung stellt somit eine Reinigungsvorrichtung bereit, welche durch einen Antriebsmotor, beispielsweise einen Getriebemotor, angetrieben wird, sodass keine zusätzliche Reinigungskraft zum Bewegen der Reinigungsvorrichtung notwendig ist. Insbesondere kann der Antriebsmotor auch derart ausgestaltet sein, dass er die Reinigungsvorrichtung nicht nur in Bewegung versetzen kann, sondern auch gleichzeitig den Betrieb des Reinigungselements regelt. Der Betrieb der Reinigungsdüse(n) kann beispielsweise mit Hilfe einer Wasserpumpe erfolgen.

Durch das Mitführen eines Vorratstanks mit Reinigungsmittel entfällt außerdem die Notwendigkeit von externem Zuführen von Reinigungsmittel. Somit sind auch keine weiteren Schläuche und/oder anderweitige Zufuhrleitungen notwendig, welche von der Reinigungsvorrichtung zu einem externen Tank (sowie von dem externen Tank zur Reinigungsvorrichtung) führen und dadurch sowohl Platz beanspruchen als auch den Bewegungsradius der Reinigungsvorrichtung deutlich einschränken. Da die erfindungsgemäße Lösung vorsieht, den Vorratstank mit dem Reinigungsmittel direkt mitzuführen, kann sich die Reinigungsvorrichtung prinzipiell beliebig weit, insbesondere entlang der gesamten Länge einer Reihe einer Photovoltaikanlage, ohne Unterbrechungen fortbewegen und die entsprechende Oberfläche reinigen. Der Vorratstank kann insbesondere ein Volumen im Bereich von 8 bis 12 Litern an Reinigungsmittel umfassen.

Die Stromzufuhr für die Reinigungsvorrichtung kann beispielsweise mittels eines mitgeführten Akkus, insbesondere eines aufladbaren Akkus, erfolgen.

Das mitgeführte Reinigungsmittel ist üblicherweise eine Lösung aus Wasser und (biologisch abbaubaren) Tensiden, beispielsweise ein Wasserenthärter. Es kann aber grundsätzlich jedes beliebige Reinigungsmittel eingesetzt werden, welches über die Reinigungsdüse auf die Oberfläche aufgetragen werden kann. Außerdem kann es auch vorgesehen sein, dass der Vorratstank in zwei oder mehr Abteile unterteilt ist, falls die verschiedenen Bestandteile des Reinigungsmittels erst kurz vor, nach oder in der Reinigungsdüse zusammengeführt werden sollen.

Zum eigentlichen Reinigen der Oberfläche weist die erfindungsgemäße Reinigungsvorrichtung zumindest ein Reinigungselement auf, welches derart ausgestaltet ist, dass es das Reinigungsmittel auf der Oberfläche verteilen und damit diese reinigen kann. Das Reinigungselement kann beispielsweise als Waschwalze ausgebildet sein, welche im Betrieb rotiert und damit ähnlich einer Waschwalze einer Autowaschanlage die Oberfläche reinigt. Grundsätzlich ist es auch möglich, dass die Reinigungsvorrichtung mehr als ein Reinigungselement aufweist, um noch bessere Reinigungsergebnisse erzielen zu können. Es können außerdem auch anderweitig ausgebildete Reinigungselemente vorgesehen sein, welche z.B. nicht rotieren, sondern die Oberfläche lediglich sauber wischen oder alternativ die Oberfläche mittels Hochdruck (mit oder ohne Reinigungsmittel) reinigen.

Die erfindungsgemäße Reinigungsvorrichtung kann außerdem derart ausgebildet sein, dass sie von wenigen, insbesondere zwei, Personen angehoben und versetzt werden kann, sodass sie beispielsweise von einer Solarmodulreihe auf die nächste manuell versetzt werden kann. Insbesondere kann es vorgesehen sein, dass die gesamte Reinigungsvorrichtung nicht mehr als 40 bis 50 Kilogramm wiegt. Insbesondere kann eine leere Reinigungsvorrichtung, also mit entleertem Vorratstank, weniger als 30 kg bzw. eine Reinigungsvorrichtung mit gefülltem Vorratstank zwischen 30 und 40 kg wiegen.

Gemäß einer ersten Ausführungsform der Erfindung umfasst die Reinigungsvorrichtung außerdem zwei oder mehr Laufräder und/oder Antriebsräder über welche die Reinigungsvorrichtung sich fortbewegt. Demnach ist der Antriebsmotor insbesondere auch derart ausgebildet sein, dass er die zwei oder mehr Laufräder und/oder Antriebsräder, insbesondere direkt, antreibt, um die Reinigungsvorrichtung in Fortbewegungsrichtung zu bewegen. Die Laufräder und/oder Antriebsräder können außerdem jeweils auf entsprechenden Antriebswellen, welche vom Antriebsmotor angetrieben werden, gelagert sein. Grundsätzlich ist es auch möglich, dass pro Antriebswelle mehr als ein Laufrad vorgesehen ist.

Gemäß einer weiteren Ausführungsform umfasst die Reinigungsvorrichtung außerdem zumindest ein Trocknungselement, das dazu ausgebildet ist, die Oberfläche zumindest von dem Reinigungsmittel zu befreien. Das Trocknungselement kann verschiedenartig ausgebildet sein. Das Trocknungselement kann beispielsweise als Abzieher, insbesondere aus Kunststoff, ausgebildet sein. Hierbei dient das Trocknungselement als eine Art Scheibenwischer, der die auf der Oberfläche zurück gebliebene Menge an Reinigungsmittel sowie gegebenenfalls auch Verschmutzungsrückstände von der Oberfläche abzieht, sodass diese nicht an der Oberfläche antrocknen. Dementsprechend kann das Trocknungselement bei dieser Ausführungsform aus Gummi oder einem biegsamen Kunststoff hergestellt sein, welcher die Oberfläche nicht zerkratzt.

In manchen Ausführungsformen kann das Trocknungselement zusätzlich eine Saugvorrichtung umfassen, welche dazu ausgebildet ist, das Reinigungsmittel nach dem Reinigen der Oberfläche wieder aufzusaugen und an anderer Stelle abzulassen oder in einem Entsorgungstank zu speichern. Dies kann weiter dazu beitragen, die Oberfläche möglichst frei von Rückständen zu hinterlassen. Die Ausführungsform mit Entsorgungstank kann insbesondere die Menge an Reinigungsmittel, welche nach der Reinigung in die Natur gelangt, minimieren.

Gemäß einer weiteren Ausführungsform ist das Trocknungselement schwenkbar, insbesondere um eine Schwenkachse, welche senkrecht zur Fortbewegungsrichtung ausgerichtet ist, an der Reinigungsvorrichtung angebracht. Ein schwenkbares Trocknungselement kann dahingehend vorteilhaft sein, dass eine überschüssige Menge an Reinigungsmittel von der Oberfläche geschoben bzw. gewischt werden kann, sodass wenig bis keine Rückstände auf der Oberfläche verbleiben. Es kann allerdings auch möglich sein, dass das Trocknungselement derart schwenkbar ist, dass es zu der Oberfläche hin oder von der Oberfläche weg geschwenkt werden kann, sodass es je nach Ausrichtung nicht in ständigem Kontakt mit der zu reinigenden Oberfläche ist.

In manchen Ausführungsformen umfasst die Antriebseinheit außerdem einen Schwenkantrieb zum automatischen Schwenken des Trocknungselements. Dadurch kann der Schwenkantrieb auch gegebenenfalls durch den zentralen Antriebsmotor gesteuert werden, sodass der Reinigungsablauf der Reinigungsvorrichtung aufeinander abgestimmt ist.

Gemäß einer weiteren Ausführungsform umfasst die Reinigungsvorrichtung zusätzlich zumindest ein Führungsrad, insbesondere zwei oder mehr als zwei Führungsräder, welches die Fortbewegungsrichtung der Reinigungsvorrichtung lateral begrenzt, wobei das Führungsrad insbesondere senkrecht zur Fortbewegungsrichtung angeordnet ist. Das heißt, das Führungsrad ist üblicherweise derart angeordnet, dass es an einer in Fortbewegungsrichtung betrachtet lateralen Seite des zu reinigenden Solarmoduls bzw. Photovoltaikanlage anliegt.

Das Führungsrad bzw. die Führungsräder können insbesondere auch derart angeordnet sein, dass sie die Reinigungsvorrichtung gewissermaßen halten bzw. als Aufhängung an dem Solarmodul bzw. Photovoltaikanlage dienen, wenn diese nicht horizontal ausgerichtet ist, sondern schräg bspw. in Richtung der Sonne ausgerichtet ist.

Eine weitere Ausführungsform sieht es außerdem vor, dass die Antriebseinheit einen Laufradantrieb zum, insbesondere direkten, Antrieb der Laufräder und/oder Antriebsräder umfasst. Der Laufradantrieb kann die Laufräder und/oder Antriebsräder entweder direkt antreiben oder auch, falls vorhanden, die Antriebswellen der Laufräder und/oder Antriebsräder antreiben, sodass sich in jedem Fall die Reinigungsvorrichtung in Fortbewegungsrichtung bewegt. Der Laufradantrieb kann insbesondere auch von dem Antriebsmotor angetrieben und/oder geregelt werden.

Gemäß einer Ausführungsform weist die Reinigungsvorrichtung zumindest einen, insbesondere zwei, Haltegriffe zum Transportieren, insbesondere Versetzen, der Reinigungsvorrichtung auf. Wie weiter oben bereits erwähnt, kann die Reinigungsvorrichtung derart ausgebildet sein, dass sie von einem oder mehreren Benutzern angehoben und/oder versetzt werden kann. Hierfür kann die Reinigungsvorrichtung einen oder mehrere, insbesondere zwei, Haltegriffe aufweisen, um die Handhabung, d.h. das Transportieren, der Reinigungsvorrichtung zu erleichtern.

Gemäß einer noch weiteren Ausführungsform umfasst die Reinigungsvorrichtung außerdem ein Steuerungsmodul, insbesondere eine Elektrosteuerung, das ausgestaltet ist, um die Antriebseinheit zu regeln. Das Steuerungsmodul kann dementsprechend derart ausgebildet sein, dass es die Reinigungsvorrichtung, insbesondere automatisch, steuern kann. Es kann hierfür auch möglich sein, dass ein Benutzer das Steuerungsmodul von extern, beispielsweise über eine Funkverbindung (WLAN, Bluetooth o.ä.) steuern kann, um damit den Betrieb der Reinigungsvorrichtung überwachen und/oder regeln zu können.

Eine weitere Ausführungsform sieht es außerdem vor, dass die Reinigungsvorrichtung zwei Reinigungsdüsen sowie zwei Trocknungselemente aufweist. Die Reinigungsdüsen und Trocknungselemente können insbesondere so angeordnet sein, dass jeweils eine Reinigungsdüse bzw. ein Trocknungselement in Fortbewegungsrichtung zeigt, während das jeweils andere entgegen der Fortbewegungsrichtung ausgerichtet ist. Dies hat den Vorteil, dass, wenn sich die Reinigungsvorrichtung sich in zwei Richtungen bewegen kann, beispielsweise ein verbesserter Reinigungseffekt erzielt werden kann, indem die Reinigungsvorrichtung eine Oberfläche zweimal reinigt (je Bewegungsrichtung einmal). Somit muss die Reinigungsvorrichtung, wenn sie beispielsweise am Ende einer Modulreihe angekommen ist und/oder zur Startposition zurückgekehrt ist, lediglich auf die nächste Reihe gesetzt werden und muss dabei nicht auch noch um ihre eigene Achse gedreht werden. Außerdem kann die Reinigung besonders verschmutzter Oberflächen somit intensiviert werden. Bei der zweimaligen Reinigung einer Oberfläche ist es grundsätzlich auch möglich, dass die Trocknungselemente dabei entweder in beiden Fortbewegungsrichtungen zum Einsatz kommen oder aber auch nur in einer Fortbewegungsrichtung (bei der Rückfahrt) verwendet werden.

Es kann auch vorgesehen sein, dass die Reinigungsvorrichtung mehr als zwei Reinigungsdüsen aufweist, welche nebeneinander und/oder entgegengesetzt zueinander angeordnet sind, um das Reinigungsmittel besser auf der Oberfläche verteilen zu können.

Die entsprechende Anzahl an Trocknungselementen muss nicht direkt mit der Anzahl an Reinigungsdüsen zusammenhängen und kann beliebig gewählt werden.

Weitere Ausführungen und Beispiele der Erfindung werden unter Bezugnahme der Figuren beschrieben. In diesen zeigen:
- Fig. 1:: schematisch Komponenten einer erfindungsgemäße Reinigungsvorrichtung in einer Seitenansicht;
- Fig. 2:: die Reinigungsvorrichtung aus Fig. 1 in einer Draufsicht; und
- Fig. 3:: eine schematische Innenansicht eines Umschaltkastens.

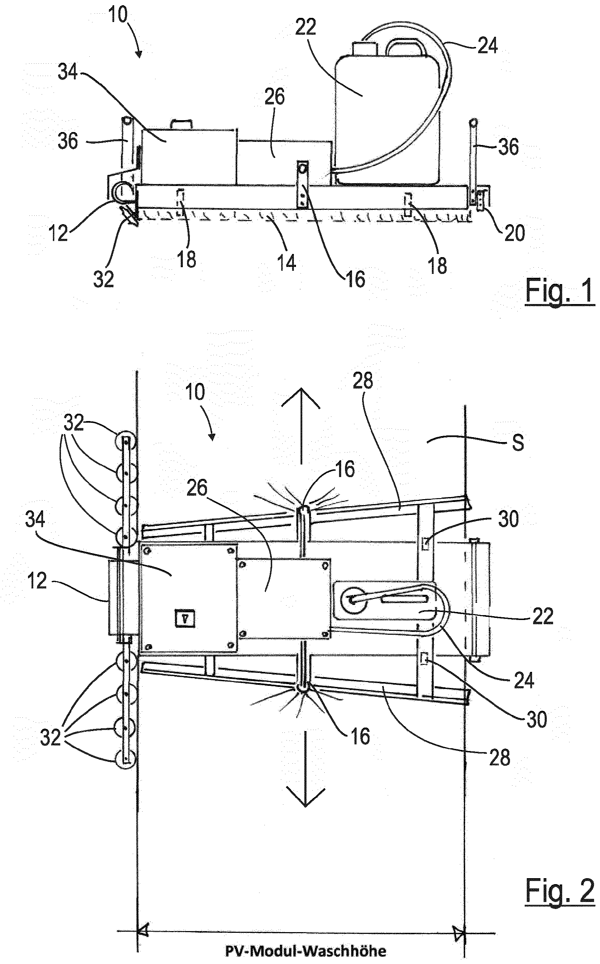

Fig. 1 zeigt schematisch Komponenten einer erfindungsgemäße Reinigungsvorrichtung 10 in einer Seitenansicht. Eine Draufsicht der Reinigungsvorrichtung 10 ist in Fig. 2 dargestellt.

In der gezeigten Ausführungsform weist die Reinigungsvorrichtung 10 eine Antriebseinheit mit einem Antriebsmotor 12, der als Getriebemotor ausgestaltet ist, ein Reinigungselement 14 sowie zwei Reinigungsdüsen 16 (siehe Fig. 2) auf. Es ist außerdem in Fig. 2 zu erkennen, dass die Reinigungsvorrichtung 10 auf einem Solarmodul S aufgesetzt ist und sich in zwei Fortbewegungsrichtungen, welche schematisch durch die beiden Pfeile dargestellt sind, entlang des Solarmoduls S fortbewegen kann. Die Stromversorgung der Reinigungsvorrichtung 10 erfolgt durch einen aufladbaren Akku (nicht dargestellt).

Zur Fortbewegung weist die Reinigungsvorrichtung außerdem zwei Antriebsräder 18 auf, welche jeweils auf einer (eigenen) Antriebswelle (nicht dargestellt) gelagert sein können. Zum Ansteuern der Antriebsräder 18 weist die Antriebseinheit außerdem einen Laufradantrieb 20 auf. Dieser kann entweder unabhängig steuerbar sein oder von dem Antriebsmotor 12 zentral geregelt werden.

Sollte keine Antriebswelle vorhanden sein könnten auch einfache Laufräder (nicht gezeigt) zum Einsatz kommen, die die Reinigungsvorrichtung führen können.

Außerdem weist die Reinigungsvorrichtung 10 der Figuren 1 und 2 auf einer Seite mehrere Führungsräder 32 auf, die an einer Seitenfläche des Solarmoduls S anliegen. Durch die Führungsräder 32 wird die Fortbewegungsrichtung der Reinigungsvorrichtung 10 lateral zumindest in einer Richtung begrenzt. Insbesondere können die Führungsräder 32 aber auch dazu dienen, die Reinigungsvorrichtung 10 an dem Solarmodul S bzw. der Photovoltaikanlage anzuordnen, d.h. gewissermaßen aufzuhängen, wenn diese nicht horizontal ausgerichtet sind, sondern schräg in Richtung Sonne stehen. Die Führungsräder 32 bzw. deren Aufhängung kann somit auch dazu dienen, die Reinigungsvorrichtung 10 an dem zu reinigenden Solarmodul S zu halten.

Grundsätzlich wäre es auch möglich, dass an der den Führungsrädern 32 gegenüber liegenden Seite der Reinigungsvorrichtung 10 ebenfalls weitere Führungsräder 32 vorgesehen sind, sodass die Reinigungsvorrichtung 10 gewissermaßen an dem Solarmodul S eingespannt ist.

Zum Reinigen des Solarmoduls S ist es auch möglich, dass mehr als ein Reinigungselement 14 an der Reinigungsvorrichtung 10 angeordnet ist. Das Reinigungselement 14 kann beispielsweise als (rotierbare) Waschwalze 14 ausgebildet sein, sodass eine gründliche sowie reproduzierbare und gleichmäßige Reinigung des Solarmoduls S gewährleistet werden kann.

Ein weiterer Vorteil der erfindungsgemäßen Reinigungsvorrichtung 10 ist der Vorratstank 22, welcher über einen Schlauch 24 mit den Reinigungsdüsen 16 verbunden ist. Somit ist es nicht mehr notwendig, Schläuche an der Reinigungsvorrichtung 10 anzubringen, welche zu externen Tanks führen und somit den Bewegungsradius der Reinigungsmaschine massiv einschränken bzw. abseits des Solarmoduls S Raum benötigen.

Wie in den Figuren auch erkennbar ist, kann zwischen dem Vorratstank 22 und den Reinigungsdüsen 16 ein Umschaltkasten 26 angeordnet sein, in welchem die Zufuhr des Reinigungsmittels zu den Reinigungsdüsen 16 geregelt wird.

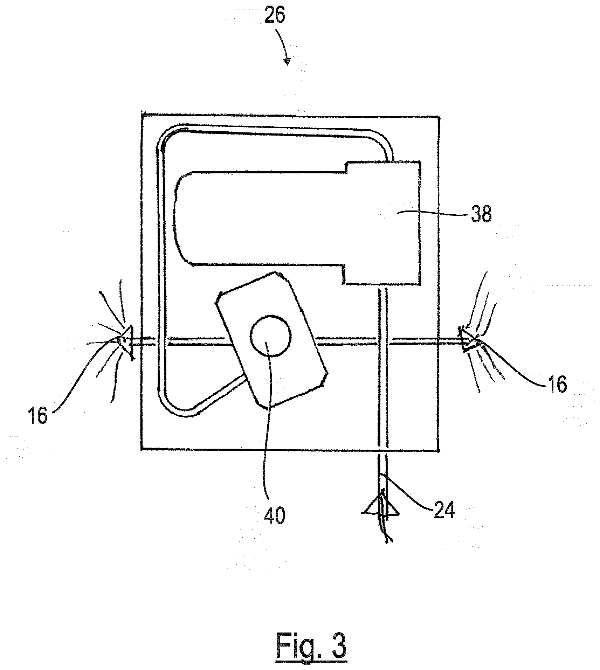

Hierfür kann der Umschaltkasten beispielsweise eine Pumpe 38 (siehe Fig. 3) sowie ein oder mehrere Ventile, insbesondere Magnetventile 40 oder Kugelventile (siehe Fig. 3) aufweisen, mit Hilfe derer das Reinigungsmittel mit ausreichendem Druck den Reinigungsdüsen 16 zugeführt werden kann, sodass das Reinigungsmittel durch die Reinigungsdüsen 16 auf der Oberfläche des Solarmoduls S aufgesprüht und damit flächig verteilt werden kann. Die Ventile können dazu dienen, die Reinigungsdüsen zu verschließen, wenn kein Reinigungsmittel aufgesprüht werden soll, beispielsweise wenn eine Reinigungsdüse nicht in Bewegungsrichtung zeigt. Zudem kann eine (nicht dargestellte) Phasenumkehr-Schaltung integriert sein, welche dazu ausgebildet ist, die Reinigungsmittelzufuhr zu steuern, sodass nur jene Reinigungsdüse 16 angesteuert bzw. mit Reinigungsmittel versorgt wird, welche in Fortbewegungsrichtung zeigt.

Des Weiteren weist die dargestellte Reinigungsvorrichtung 10 zwei Trocknungselemente 28 in Form von zwei Abziehern (Scheibenwischern) auf, welche dazu ausgelegt sind, die Oberfläche des Solarmoduls S nach der Reinigung zu trocknen bzw. von überschüssigem Reinigungsmittel zu befreien. Hierfür sind die Trocknungselemente 28 schwenkbar angeordnet, um sowohl in also auch gegen die Fortbewegungsrichtung schwenken zu können.

Es ist aber auch denkbar, dass die Trocknungselemente 28 derart angeordnet sind, dass sie zur Oberfläche des Solarmoduls S hin bzw. von diesem weg schwenken können, sodass flexibel gesteuert werden kann, wann die Trocknungselemente 28 in Kontakt mit dem Solarmodul S sind. Es ist nämlich beispielsweise möglich, dass nur das in Fortbewegungsrichtung betrachtet hintere Trocknungselement 28 in Kontakt mit der zu reinigenden Oberfläche ist, da ansonsten das von der Reinigungsdüse 16 aufgetragene Reinigungsmittel bereits von der Oberfläche gewischt werden würde bevor die Reinigungselemente 14 die Möglichkeit hatten, die Oberfläche zu reinigen.

Außerdem können die Trocknungselemente 28 derart gestaltet sein, dass sie mittels des Steuermoduls 34 (siehe unten) automatisch ein- oder ausgeschaltet werden können.

Ein Nutzer der Reinigungsvorrichtung 10 kann damit selbst entscheiden, wann die Trocknungselemente 28 mit der Oberfläche des Solarmoduls S in Verbindung stehen und diese abziehen. Dementsprechend kann zum Beispiel, wie oben bereits erwähnt, je nach Fahrtrichtung der Reinigungsvorrichtung ein Trocknungselement 28 angehoben sein während das zweite auf der Oberfläche aufliegt, sodass die Reinigungsvorrichtung zuerst die Oberfläche (nass) reinigen kann und das Trocknungselement 28 hinterher die Oberfläche von überschüssigem Reinigungsmittel befreit.

Zum Schwenken der Trocknungselemente weist die Reinigungsvorrichtung 10 außerdem je Trocknungselement 28 einen Schwenkantrieb 30 auf, welcher die Schwenkbewegung des Trocknungselements 28 steuert. Es sowohl möglich, dass jeder Schwenkantrieb 30 einzeln und unabhängig steuerbar ist, als auch dass der oder die Schwenkantrieb(e) zentral vom Antriebsmotor 12 geregelt werden.

Die Trocknungselemente 28 können bspw. aus einem Elastomer bzw. Gummi bestehen, bspw. aus einem Material welches auch für Scheibenwischer bei einem Auto oder ähnlichem eingesetzt wird. Dies bietet den Vorteil, dass sich die Trocknungselemente 28 relativ zur Oberfläche des Solarmoduls deformieren (und damit anschmiegen) können und diese somit auf eine effiziente Weise reinigen bzw. trocknen können.

Das Material der Trocknungselemente 28 ist vorzugsweise weicher als ein Material der Oberfläche des Solarmoduls S und/oder einer Aufhängung der Trocknungselemente 28 der Reinigungsvorrichtung 10. Dies bietet ebenfalls den Vorteil, dass sich die Trocknungselemente 28 relativ zur Oberfläche des Solarmoduls deformieren (anschmiegen) können und diese somit auf eine effiziente Weise reinigen können.

Des Weiteren weist die Reinigungsvorrichtung 10 ein Steuermodul 34 auf, welches dazu ausgebildet sein kann, die Reinigungsvorrichtung 10 zentral zu steuern bzw. zu regeln. Alternativ könnte es auch möglich sein, dass das Steuermodul 34 lediglich den Antriebsmotor 12 steuert. Es könnte grundsätzlich zusätzlich auch möglich sein, dass das Steuermodul 34 von extern, beispielsweise über eine Funkverbindung, geregelt werden kann, sodass ein Benutzer Funktion der Reinigungsvorrichtung 10 von extern überwachen und regeln kann.

Zum Anheben, Transportieren und/oder Versetzen der Reinigungsvorrichtung 10 weist die Reinigungsvorrichtung außerdem zwei Haltegriffe 36 auf. Über diese Haltegriffe 36 kann die Reinigungsvorrichtung 10 einfach durch einen, zwei oder mehrere Benutzer angehoben und, beispielsweise auf eine neue Reihe von Solarmodulen, versetzt werden.

Somit kann die erfindungsgemäße Reinigungsvorrichtung 10 über die Haltegriffe 36 auf ein Solarmodul S oder eine ganze Reihe von Solarmodulen gesetzten werden. Durch die Führungsräder 32 wird sie am Solarmodul S entlang geführt und außerdem bei einer Schräglage der Module an Ort und Stelle gehalten. Durch Ansteuern des Steuermoduls 34 kann die Reinigungsvorrichtung 10 dann in Bewegung versetzten werden. Dabei kann gleichzeitig auch der Reinigungsvorgang gestartet werden, indem die Reinigungsdüse(n) 16 mit Reinigungsmittel versorgt werden, welches sie auf der Oberfläche des Solarmoduls verteilen. Die Waschwalzen 14, d.h. die Reinigungselemente 14, reinigen dann besagte Oberfläche und die Trocknungselemente 28 befreien im Anschluss die Oberfläche von überschüssigem Reinigungsmittel.

Wenn die Reinigungsvorrichtung 10 am Ende einer Solarmodulreihe angekommen ist, kann das Steuermodul 34 automatisch, z.B. durch das Signal eines Endschalters (nicht dargestellt), die Reinigungsvorrichtung 10 stoppen und eine Phasenumkehr veranlassen, sodass die Rückkehr zur Startposition erfolgt, wo die Reinigungsvorrichtung 10 dann wiederum durch das Signal eines weiteren (nicht dargestellten) Endschalters automatisch stoppt. Bei der Rückkehr zur Startposition kann die Reinigungsvorrichtung dann einen weiteren Reinigungsdurchlauf vornehmen. Hierbei ist es auch denkbar, dass lediglich bei diesem zweiten Reinigungsdurchlauf das entsprechende (hintere) Trocknungselement 28 zum Einsatz kommt, um die gereinigte Oberfläche vollständig von Rückständen zu befreien. Alternativ kann es aber auch möglich sein, dass jeder Reinigungsdurchlauf vollständig, d.h. inklusive Trocknungselement 28, erfolgt.

Dementsprechend erfolgt die Reinigung einer Modulreihe vollständig automatisch. Außerdem bringt sich die Reinigungsvorrichtung 10 nach jedem Reinigungsvorgang jeweils automatisch wieder in ihre Ausgangslage zurück, sodass sie wieder bereit für einen neuen Reinigungsvorgang ist. Es muss dann lediglich gegebenenfalls der Vorratstank 22 befüllt und, falls vorhanden, der Entsorgungstank entleert, werden.

Im Anschluss kann die Reinigungsvorrichtung 10 einfach über die Haltegriffe 36 angehoben und auf die nächste Modulreihe gesetzt und erneut gestartet werden.

Somit kann die erfindungsgemäße Reinigungsvorrichtung 10 durch ihr vergleichsweise geringes Gewicht und ihren kompakten Aufbau inklusive Vorratstank 22 flexibel eingesetzt werden und auch bei beengten Platzverhältnissen zum Einsatz kommen. Außerdem können mit der erfindungsgemäßen Reinigungsvorrichtung 10 reproduzierbar gute Reinigungsergebnisse erzielt werden.

Da die erfindungsgemäße Reinigungsvorrichtung außerdem spiegelsymmetrisch aufgebaut und geschaltet ist, ist es auch unerheblich, von welcher Seite aus eine Solarmodulreihe gereinigt werden soll. Somit ist die erfindungsgemäße Reinigungsvorrichtung flexibel und vielseitig einsetzbar.

## Patentansprüche

1. Reinigungsvorrichtung zur halbautomatischen Reinigung von Oberflächen von Solarmodulen und/oder Photovoltaikanalagen umfassend
- eine Antriebseinheit zum Fortbewegen der Reinigungsvorrichtung (10) in eine Fortbewegungsrichtung, wobei die Antriebseinheit zumindest einen Antriebsmotor (12), insbesondere einen Getriebemotor, umfasst, wobei der Antriebsmotor (12) zumindest derart ausgestaltet ist, dass er die Reinigungsvorrichtung in Bewegung (10) versetzt,
- einen Vorratstank (22) zum Mitführen eines Reinigungsmittels,
- zumindest eine Reinigungsdüse (16) zum Aufbringen des Reinigungsmittels auf die Oberfläche, wobei die Reinigungsdüse (16) eine Fluidverbindung mit dem Vorratstank (22) aufweist, und
- zumindest ein Reinigungselement (14) zum Reinigen der Oberfläche mittels des Reinigungsmittels.

2. Reinigungsvorrichtung nach Anspruch 1,
ferner umfassend zwei oder mehr Laufräder und/oder Antriebsräder (18) über welche die Reinigungsvorrichtung (10) sich fortbewegt.

3. Reinigungsvorrichtung nach Anspruch 1 oder 2,
ferner umfassend zumindest ein Trocknungselement (28), das dazu ausgebildet ist, die Oberfläche zumindest von dem Reinigungsmittel zu befreien.

4. Reinigungsvorrichtung nach Anspruch 3,
wobei das Trocknungselement (28) schwenkbar, insbesondere um eine Schwenkachse, welche senkrecht zur Fortbewegungsrichtung ausgerichtet ist, an der Reinigungsvorrichtung (10) angebracht ist.

5. Reinigungsvorrichtung nach Anspruch 3 oder 4,
wobei die Antriebseinheit einen Schwenkantrieb (30) zum automatischen Schwenken des Trocknungselements (28) umfasst.

6. Reinigungsvorrichtung nach einem der vorstehenden Ansprüche,
wobei die Reinigungsvorrichtung (10) zusätzlich zumindest ein Führungsrad (32), insbesondere zwei oder mehr als zwei Führungsräder (32), umfasst, welches die Fortbewegungsrichtung der Reinigungsvorrichtung (10) lateral begrenzt, wobei das Führungsrad (32) insbesondere senkrecht zur Fortbewegungsrichtung angeordnet ist.

7. Reinigungsvorrichtung nach einem der vorstehenden Ansprüche,
wobei die Antriebseinheit einen Laufradantrieb (20) zum, insbesondere direkten, Antrieb der Laufräder und/oder Antriebsräder (18) umfasst.

8. Reinigungsvorrichtung nach einem der vorstehenden Ansprüche,
wobei die Reinigungsvorrichtung (10) zumindest einen, insbesondere zwei, Haltegriffe (36) zum Transportieren, insbesondere Versetzen, der Reinigungsvorrichtung (10) aufweist.

9. Reinigungsvorrichtung nach einem der vorstehenden Ansprüche,
ferner umfassend ein Steuerungsmodul (34), insbesondere eine Elektrosteuerung, ausgestaltet, um die Antriebseinheit zu regeln.

10. Reinigungsvorrichtung nach einem der vorstehenden Ansprüche, insbesondere nach einem der Ansprüche 2 bis 9,
wobei die Reinigungsvorrichtung (10) zwei Reinigungsdüsen (16) sowie zwei Trocknungselemente (28) aufweist.
